(19)

**Europäisches Patentamt**

**European Patent Office**

**Office européen des brevets**

(11) **EP 4 350 309 B1**

(12) **EUROPEAN PATENT SPECIFICATION**

(45) Date of publication and mention
of the grant of the patent:
**10.12.2025 Bulletin 2025/50**

(21) Application number: **22203906.7**

(22) Date of filing: **26.10.2022**

(51) International Patent Classification (IPC):
**G01K 1/02** *(2021.01)*      **G01K 1/143** *(2021.01)*
**G01K 7/42** *(2006.01)*      **G01K 13/02** *(2021.01)*
**G01N 25/18** *(2006.01)*

(52) Cooperative Patent Classification (CPC):
**G01K 13/02; G01K 1/026; G01K 1/143; G01K 7/42;**
**G01N 25/18**

(54) **COMPUTER IMPLEMENTED METHOD FOR DETERMINING BOUNDARY THERMAL RESISTANCE DATA, A COMPUTER PRODUCT ELEMENT AND A SYSTEM**

COMPUTERIMPLEMENTIERTES VERFAHREN ZUR BESTIMMUNG VON GRENZWÄRMEWIDERSTANDSDATEN, COMPUTERPRODUKTELEMENT UND SYSTEM

PROCÉDÉ MIS EN UVRE PAR ORDINATEUR POUR DÉTERMINER DES DONNÉES DE RÉSISTANCE THERMIQUE DE LIMITE, ÉLÉMENT DE PRODUIT INFORMATIQUE ET SYSTÈME

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.10.2022 EP 22200314**

(43) Date of publication of application:
**10.04.2024 Bulletin 2024/15**

(73) Proprietor: **ABB SCHWEIZ AG**
**5400 Baden (CH)**

(72) Inventors:
• **GEBHARDT, Joerg**
  **55130 Mainz (DE)**
• **SOSALE, Guruprasad**
  **80997 Munich (DE)**

• **DASGUPTA, Subhashish**
  **560066 Bangalore (IN)**
• **ACKERMANN, Patric**
  **64405 Fischbachtal (DE)**
• **DAAKE, Wilhelm**
  **32469 Petershagen (DE)**
• **SCHROEDER, Karsten**
  **32469 Petershagen (DE)**

(74) Representative: **Maiwald GmbH**
**Engineering**
**Elisenhof**
**Elisenstrasse 3**
**80335 München (DE)**

(56) References cited:
**EP-A1- 4 009 022      EP-B1- 3 537 124**
**US-A1- 2017 219 438**

EP 4 350 309 B1

**Description**

**FIELD OF THE INVENTION**

The present invention relates to computer implemented method for determining boundary thermal resistance data and/or for providing temperature data of a fluid flowing through a pipe, a system for providing temperature and flow data of a fluid flowing through a pipe and a respective computer program product.

**BACKGROUND OF THE INVENTION**

Determination of temperatures are vital for safe running of facilities, as being one of the main control parameters for process control. Ensuring that temperature measurements of process media are accurate and repeatable is critical.

Traditional temperature measurement is achieved by introducing an invasive sensor, for example a thermowell, into the pipe such that a measurement is taken in the process stream. Alternately, surface temperature sensors are placed at a surface of a wall of the pipe/vessel in order to measure the temperature of this surface, and respectively determine the temperature of the medium at the other side of the wall.

Temperature is a vital parameter for the safe and efficient operation of process facilities and in many cases these technologies are insufficient to detect abnormal or hazardous circumstances. Indeed, there are many situations in reality where there are spatial inhomogenities in the temperature field across and along the pipe/vessel. Existing state of the art invasive or non-invasive sensors will not capture these circumstances.

Reference document EP 3 537 124 B1 relates to a method for determining a temperature of a fluid flowing through a pipe section.

Reference document EP 4 009 022 A1 relates to method for validating an invasive temperature measurement system.

Reference document US 2017/219438 A1 relates to an apparatus and to a method for early warning against condensation induced hydraulic shock in a component conveying a fluid.

In view of the above, it is an object of the present invention to provide an improved method for determining boundary thermal resistance data and/or providing temperature data of a fluid flowing through a pipe. It is in particular an object of the present invention to provide a method with a more accurate boundary layer resistance calculation.

In view of the above, it is an object of the present invention to provide an improved system for providing temperature data of a fluid flowing through a pipe. It is in particular an object of the present invention to provide a system configured to provide flow data.

These and other objects, which become apparent upon reading the following description, are solved by the subject matter of the independent claims. The dependent claims refer to preferred embodiments of the invention.

**SUMMARY OF THE INVENTION**

According to a first aspect of the present disclosure, a computer implemented method for determining boundary thermal resistance data of a boundary layer and optionally for providing temperature data of a fluid flowing through a pipe is provided:

- obtaining first temperature data from a first temperature sensor, which is arranged at a first pipe section;
- obtaining second temperature data from a second temperature sensor, which is arranged at a second pipe section, wherein
- the first temperature sensor is a non-invasive temperature sensor and the second temperature sensor is an invasive temperature sensor; ;
- providing process condition data;
- determining boundary thermal resistance data of a boundary layer of the fluid next to an inner surface of the wall of the pipe based on said process condition data; and/or based on the first temperature data and/or the second temperature data;
- optionally, determining the temperature data of the fluid based on at least the first and/or second temperature data and the boundary thermal resistance data of the boundary layer; and

The first and second temperature sensors are arranged spatially offset. That means the first and second temperature sensors are distanced from each other in a longitudinal and/or a circumferential direction. The first and second pipe sections describe the positions where the first and second temperature sensors are arranged.

Additionally, an ambient temperature may be provided or measured by a third temperature sensor. By taking the ambient or environmental temperature into consideration, a better measurement may be achieved.

The first and second temperature sensor are arranged on an outer surface of the wall of the pipe. The outer surface of the wall of the pipe may comprise an insulation material which is arranged around the pipe. The first and second temperature sensors can be arranged, for example, directly on the pipe or with a section extending outside the insulation material..

The first temperature data may comprise data of the surface temperature of the pipe and the second temperature data may comprise data of the temperature of the fluid inside the pipe. The type of data provided depends on the used sensor type.

The boundary layer can be described as the layer of the fluid, which is next to the inner surface of the wall of the pipe. The stream of the boundary layer is relatively slow compared to the mainstream fluid. This layer has its own thermal resistance and contributes to the difference in temperature between the bulk temperature of the flowing fluid and the wall temperature.

Accuracy of measurement depends especially on a correct estimation of the boundary layer resistance. The boundary layer resistance is the thermal resistance of the fluid layer next to the inner surface of the wall of the pipe and is an important component in the overall thermal resistance network connecting the surface temperature and the fluid temperature. Variation in boundary layer resistance, due to flow regime changes, distance of measurement point from the pipe inlet, upstream flow distorting features and natural convection or buoyancy effects causes drifts in the measured temperature.

The method may comprise a prediction and/or comparison model, wherein a surface temperature may be predicted and compared to a measured surface temperature. The predicted surface temperature and the measured surface temperature may be based on the first and second temperature data. More precisely, the first temperature sensor provides a measured surface temperature and the second temperature sensor is used to predict the surface temperature. It may be also possible, that the comparison model uses a nominal temperature as reference or to predict a surface temperature. A difference from the prediction can be used to determine both the presence of stratification and the temperature distribution .

The process condition data can comprise nominal process conditions. The process condition data comprises data necessary for calculating or estimating the thermal resistance of the boundary layer and subsequently the temperature of the fluid inside the pipe. The process condition data is also used to determine flow data. The process condition data can be input manually or provided by further sensors. It is also possible that corresponding calculations are carried out offline.

A possible embodiment comprises determining flow data of the fluid based on a comparison model using the first and second temperature data and the process condition data.

The flow data can include flow state data and/or a flow regime data and/or stratification data and/or flow allocation data. Flow state data comprises information whether a stratification is present. Flow regime data comprises information if the flow is turbulent transitional or laminar. Flow allocation data indicates if there are any build-ups or allocations inside the pipe, for example crystallisation and condensation build-ups. Flow data also includes if there is any concentration of product constituents.

According to a further embodiment, the process condition data comprise distance data of the first temperature sensor and/or the second temperature sensor to a reference point, in particular to a feature of the pipe. Such a feature can be an inlet or a bending of the pipe.

According to another embodiment, the process condition data comprise flow velocity data, viscosity data, density data and pipe diameter data. With this data, the Reynolds number may be calculated. The Reynolds number helps predicting flow patterns in different fluid flow situations.

According to a further embodiment, the process condition data comprise viscosity data, thermal conductivity data and specific heat capacity data of the fluid. Based on these data the Prandtl number may be calculated. The Prandtl number is defined as the ratio of momentum diffusivity to thermal diffusivity.

The Reynolds number, the Prandtl number and the distance data of the temperature sensors are advantageous to determine or estimate a precise value of the thermal resistance of the boundary layer. In other words, the thermal resistance of the boundary layer depends at least on the Reynolds number, the Prandtl number and the distance of the temperature sensor to a reference point.

In another embodiment, the process condition data comprise curvature radius data and diameter data of the pipe. A bend with a curvature with a radius R is a flow disturbance and the curvature data is therefore advantageous for determining flow data. The curvature data and the diameter data are also further factors for determining a precise value of the resistance of the boundary layer.

According to an embodiment, the process condition data comprise pressure data and/or the pipe material data and/or wall thickness data. These data help to estimate a more precise value for the resistance of the boundary layer. These data can be measured or input manually.

According to an embodiment, a thermal resistance network is determined; wherein the thermal resistance network comprises external thermal resistance data, insulation thermal resistance data, pipe thermal resistance data and the boundary thermal resistance data. The boundary thermal resistance is preferably estimated according to one of the methods above. The remaining resistances are for example measured, known or calculated.

According to a further embodiment, a surface temperature is predicted based on the first temperature data; and the difference between the predicted surface temperature and the measured surface temperature based on the second temperature data is used to determine the flow state, in particular whether a stratification is present.

For example, at least one sensor measures the surface temperature of the pipe and is placed upstream or downstream of the invasive temperature measurement on a non-vertical or often essentially horizontal piece of the piping. Key process parameters (e.g. nominal flow rate, pressure, density, viscosity, pipe dimensions, wall thickness and thermal conductivity of the fluid) are either input as stationary nominal parameters or even as inputs from real sensors in the vicinity. The invasive temperature measurement is used in the model to predict the surface temperature. The difference between the measured surface temperature and the predicted temperature can be used to determine the flow state or whether a stratification circumstance is present. The presence or probability of a stratified state can be output in the form of an alarm. The temperature distribution across the piping is provided as an output using several variables for lower, middle and top temperature.

In a further embodiment, the non-invasive first temperature sensor is positioned circumferentially offset to the invasive second temperature sensor; wherein a surface temperature is predicted based on the second temperature data and a difference from the measured surface temperature of the first temperature sensor, and the predicted surface temperature can be used to determine an allocation of condensate, crystallization and/or other build-ups.

In this embodiment, for example, at least one sensor that measures the surface temperature of the pipe is placed upstream or downstream of an invasive temperature sensor or at the same axial position as an invasive temperature sensor. The non-invasive sensor is positioned circumferentially in a position where a condensate collection is most likely to occur. For example, the surface sensor on an essentially horizontal pipe should be mounted on or close to the lower end of the pipe. For a bend, the sensor is mounted on or close to the outer side. process condition data (e.g. nominal flow rate, pressure, density, viscosity, pipe dimensions, wall thickness and thermal conductivity of the fluid) are either input as stationary nominal parameters or read from real sensors in the vicinity. The invasive temperature sensor data and input process condition data are used to predict an expected surface temperature of the pipe. The invasive temperature sensor data represents the temperature in the bulk of the fluid stream. The difference between the surface sensor and the prediction is used to determine the existence of condensate. The process temperature comparison model provides a flow dependent difference in temperature between an invasive measurement and the surface. Without such a correlation with a model confidently detecting condensate build up would not be possible.

According to an embodiment, the second temperature data provides a predicted surface temperature and a measured invasive temperature, wherein the difference between the measured invasive and measured surface temperature is based on the first and second temperature data, and the predicted surface temperature is used to determine the flow regime, in particular whether a turbulent, transitional or laminar flow regime is present. In other words, the difference between the measured invasive temperature, the predicted surface temperature from a comparison model and the true surface temperature can be used to determine the flow regime through an iterative estimation process, according to which the estimated flow rate is calculated and the regime determined by calculating the Reynolds number using the nominal pipe and process parameters.

An aspect of the invention comprises a computer program product, which, when executed on computing devices of a computing environment, is configured to carry out the steps of the method according to one of the above embodiments.

Another aspect of the invention comprises a system for providing temperature data of a fluid flowing through a pipe, the system comprising:

- a first temperature sensor for providing first temperature data, which is thermally coupled to a first pipe section;
- a second temperature sensor for providing second temperature data, which is thermally coupled to a second pipe section; wherein
- the first temperature sensor is a non-invasive temperature sensor and the second temperature sensor is an invasive temperature sensor;
- the system comprises a processing unit configured to determine the temperature data of the fluid on the basis of at least the first and/or second temperature data and the boundary thermal resistance data of the boundary layer; and to
- determine flow data of the fluid based a comparison model using at least the first and second temperature data and the process condition data.

Another application of the invention is the use of a method according to one of the embodiments above for providing thermal conductivity data, in particular thermal conductivity data of the fluid.

## Brief description of the drawings

The accompanying drawings, which are included to provide a further understanding of the invention and are incorporated in and constitute a part of this application, illustrate embodiments of the invention and together with the description serve to explain the principle of the invention. The drawings display:

**Figure 1**   a schematic drawing of a longitudinal cut of a pipe comprising a non-invasive and an invasive temperature sensor;

**Figure 2**   a schematic drawing of a resistance network in a cross section of a pipe;

**Figure 3**   a schematic drawing of a resistance network of a pipe;

**Figure 4a**   a schematic diagram of an embodiment of the method according to the invention;

**Figure 4b**   another schematic diagram of an embodiment of the method according to the invention;

**Figure 5**   a schematic drawing of a longitudinal cut of a pipe with a curvature;

**Figure 6**   a schematic drawing of a longitudinal cut of a pipe;

**Figure 7**   a schematic drawing of a cross section of a pipe, illustrating a resistance network;

**Figure 8**   a schematic drawing of a longitudinal cut of a pipe comprising a non-invasive and an invasive temperature sensor;

**Figure 9**   a schematic drawing of a longitudinal cut of a pipe comprising a non-invasive and an invasive temperature sensor;

**Figure 10**   a schematic drawing of a longitudinal cut of a pipe with a curvature comprising non-invasive and an invasive temperature sensor;

**Figure 11**   a schematic drawing of a longitudinal cut of a pipe comprising a non-invasive and an invasive temperature sensor;

**Figure 12**   a schematic flow diagram;

**Figure 13**   a schematic diagram relating to the correlation between the temperature and the flow;

**Figure 14**   another schematic diagram relating to the correlation between the temperature and the flow;

**Figure 15**   another schematic diagram relating to the correlation between the temperature and the flow;

**Figure 16**   a diagram regarding the dependence between temperature and flow regime;

**Figure 17**   a diagram regarding the correlation between temperature and Reynolds number;

**Figure 18**   a diagram regarding a predicted temperature difference and the fluid velocity;

**Figure 19**   a schematic drawing of a longitudinal cut of a pipe comprising a non-invasive and an invasive temperature sensor; and

**Figure 20**   a diagram regarding the temperature difference and thermal conductivity.

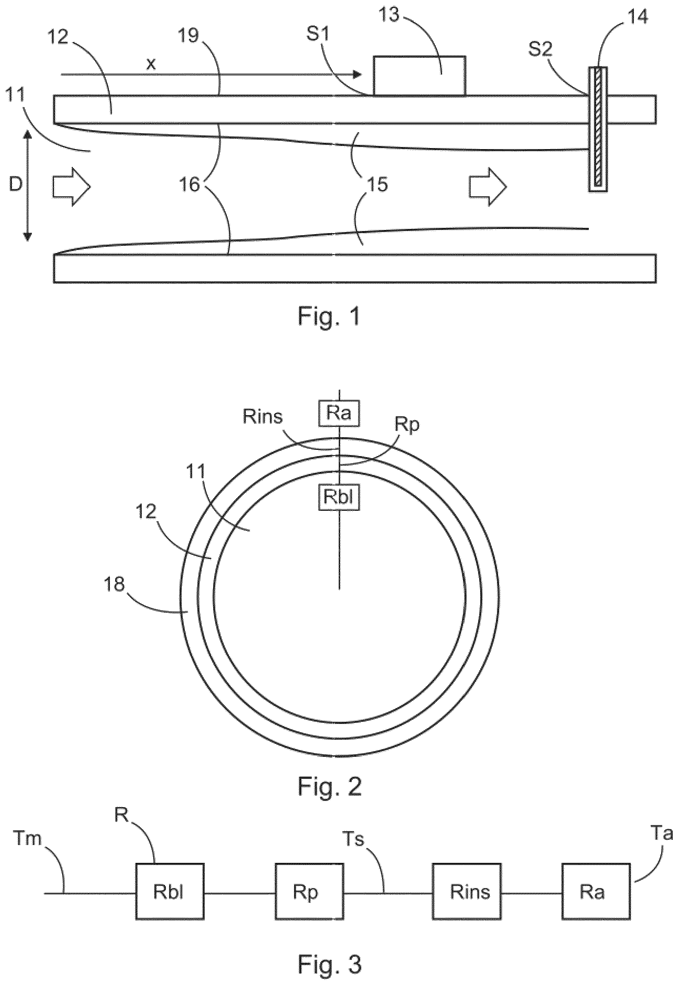

Figure 1 shows a longitudinal cut of a pipe 12. The pipe 12 has a diameter D and a finite wall thickness. A fluid 11 flows through the pipe 12. The fluid 11 can be in liquid form or gaseous. The flow of the liquid is illustrated by the arrows.

On a first pipe section S1 a first temperature sensor 13 is arranged. The first temperature sensor 13 is a non-invasive temperature sensor. On a second pipe section S2, a second temperature sensor 14 is arranged distanced from the first temperature sensor 13. The second temperature sensor 14 is an invasive temperature sensor, for example, a thermowell. Both sensors are in direct contact with the pipe 12. Other sensor types are possible.

The first temperature sensor 13 provides first temperature data T1 and the second temperature sensor 14 provides second temperature data T2. Here the first temperature sensor 13 provides a surface temperature Ts and the second temperature sensor 14 provides an invasive temperature Tinv.

The first and second pipe sections S1, S2 describe different sections on an outer surface 19 of the wall of the pipe. The outer surface 19 of the wall of the pipe can be for example a mantel of the pipe 12 or an insulation arranged around the pipe 12.

A boundary layer 15 is located on the inner surface 16 of the pipe wall 12. The boundary layer 15 is defined as the fluid layer close to the inner surface 16 of the pipe wall 12. The boundary layer 15 is relatively slow compared to the mainstream of the fluid 11. The boundary layer 15 has a thermal boundary layer resistance Rbl. The thermal boundary layer resistance Rbl is part of a resistance network.

The resistance network connects a fluid temperature Tm with the surface temperature Ts of the outer surface of the wall of the pipe 12.

Figure 2 shows a cross section of a pipe 12. Figure 2, shows components of the resistance network connecting the fluid temperature Tm and a surface temperature Ts.

Figure 3 is a schematic view of the resistance network. The resistance network comprises the pipe thermal resistance Rp and the external resistance Ra, which depends on outside conditions. The pipe 12 may be also covered with an insulation 18. Then, an additional insulation resistance Rins is added to the resistance network.

The fluid temperature Tm, which is the volume or mass average temperature of the fluid 11 is estimated by relating the surface temperature Ts to the fluid temperature Tm, via the thermal resistance network. The surface temperature Ts of the pipe 12 for a given process condition data P is dependent on thermal resistance Rbl of the boundary layer 15.

The process condition data P comprises physical data regarding the fluid and pipe parameters for determining the thermal boundary resistance Rbl. For example, nominal flow rate, pressure, density, viscosity, pipe dimensions, wall thickness and thermal conductivity.

Ts is provided by the first temperature sensor 13. Ts corresponds to the first temperature data T1. Ta is an external temperature. Ta is a reference temperature and can be measured by third sensor (not shown) or can be input into the model.

The method derives a value for the boundary layer resistance Rbl process conditions P. The boundary layer resistance Rbl is by one embodiment expressed as a function of the Reynolds number Re and the Prandtl number Pr which characterize the flow/thermal condition of the fluid. Several situations can lead to variation in boundary layer resistance Rbl without knowledge of the processing software, and cause a measurement error. Factors which cause variation in boundary layer resistance, are changing flowrates or flow regimes laminar, transitional and turbulent regimes, distance of the measurement location from the pipe inlet, upstream flow distorting features like bends, and occurrence of natural convection or buoyancy.

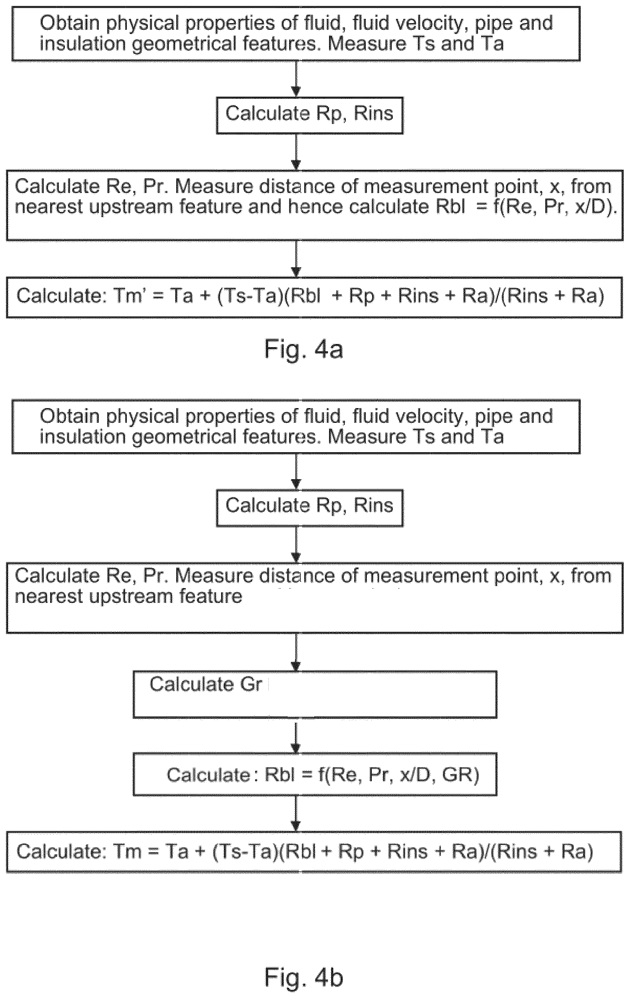

The calculation of the boundary layer resistance Rbl and the fluid temperature Tm are explained on the basis of examples shown in Figures 4a and 4b.

In Figure 4a, to estimate the fluid temperature Tm, the surface temperature Ts is measured by the first temperature sensor 13 and needs to be related to the fluid temperature Tm via the resistance network. The boundary layer 15 provides the thermal boundary resistance Rbl to transfer heat from the fluid 11 to the wall. The thermal boundary resistance Rbl needs to be accurately calculated to ensure accuracy of non-invasive temperature measurement.

At first, physical properties of the fluid are obtained. Such properties are for example fluid velocity data and pipe and/or insulation geometry data, in particular pipe diameter D. Additionally the surface temperature Ts and the external temperature Ta are measured. The surface temperature Ts can be measured for example by the first temperature sensor 13 and corresponds to the first temperature data T1.

With data based on the geometry of the pipe 12, the pipe thermal resistance Rp is calculated and, if necessary, insulation resistance Rins too.

In the next step, the Reynolds number Re and the Prandtl number Pr are calculated with the obtained data and the distance x from a nearest upstream feature to the first and/or second temperature sensor 13, 14 is measured. With this data, a boundary layer resistance Rbl can be calculated.

$$Rbl = f(Re, Pr, x/D)$$

$$Eq. 1$$

The boundary layer resistance Rbl allows to calculate the temperature of the fluid Tm (see Figure 4a).

$$(Tm-Ta)/(Ts-Ta) = (Rbl + Rp + Rins + Ra)/(Rins + Ra)$$

$$Eq. 2$$

The external resistance Ra, varies often between 2 and 6 W/m2.K (for typical insulations 18 or uninsulated pipes 12). Therefore, the external resistance Ra does not impact the temperature measurement significantly, for insulated pipes 12. The insulation resistance Rins is calculated by using the insulation dimensions and thermal conductivity of the insulation 18.

Calculation of the boundary layer resistance Rbl involves calculation of the Reynolds number Re which requires fluid velocity data, density data, viscosity data and pipe diameter data. Fluid velocity data is preferably obtained by measuring. Density and viscosity data are either measured or obtained from knowledge of the fluid 11. The Reynolds number Re is given as:

$$(density*velocity*pipe\ diameter)/dynamic\ viscosity$$

$$Eq. 3$$

The Calculation of the boundary layer resistance Rbl also requires the Prandtl number Pr. Calculation of the Prandtl number Pr requires the physical properties of the fluid, the thermal conductivity, the specific heat capacity and the viscosity data, often influenced as such by local temperature. The Prandtl number Pr is given by:

EP 4 350 309 B1

$$(\text{dynamic viscosity} * \text{specific heat capacity})/\text{thermal conductivity}$$
$$\text{Eq. 4}$$

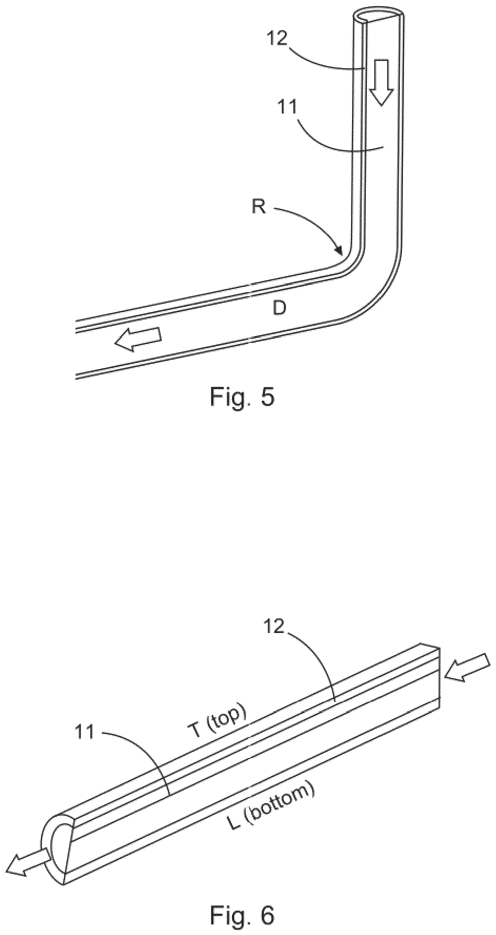

The boundary layer resistance Rbl also possibly includes the Grashof number Gr or any number which accounts for natural convection or buoyancy effects leading to flow/thermal stratification across the transverse pipe cross section (see Figure 5b).

The Grashof number Gr is calculated based on the fluid properties..

$$Rbl = f(Re, \; Pr, \; x/D, \; Gr)$$
$$\text{Eq. 5}$$

Figure 5, shows a pipe 12 with an upstream curvature with a radius R. The pipe 12 has the diameter D.

Figure 6 shows a longitudinal section of the pipe 12. The pipe 12 comprises a top and bottom section.

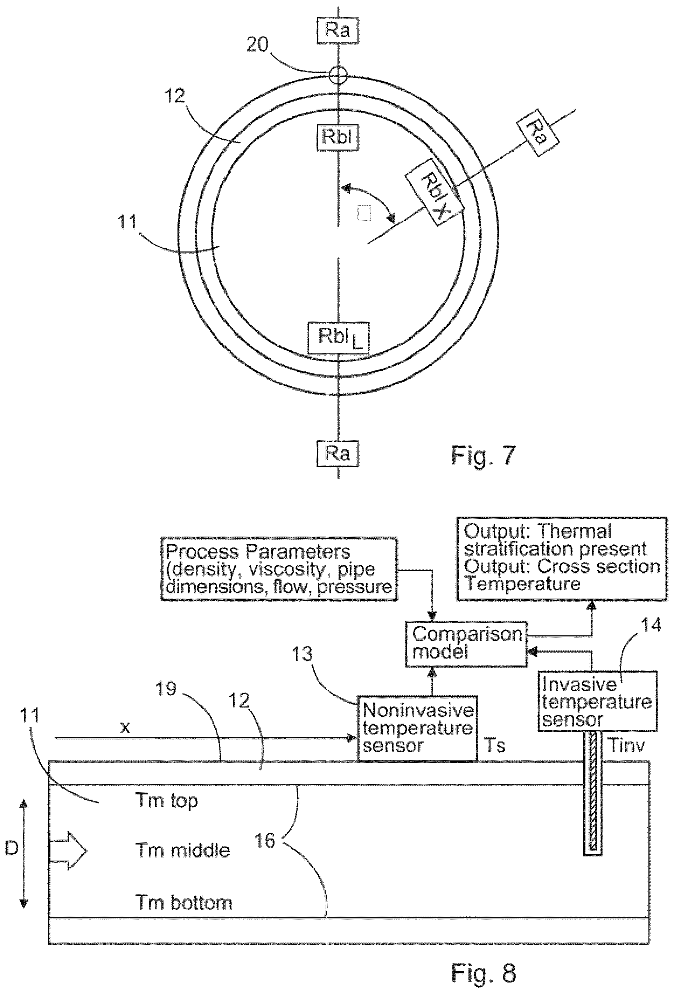

Figure 7 shows a cross section of the pipe 12 according to Figure 6. The boundary layer resistance Rbl in this embodiment includes a parameter accounting for circumferential variation in fluid/thermal conditions due to natural convection or buoyancy effects. Such a parameter is provided by the process condition data P. Here, a reference point 20 is set, so the boundary layer resistance Rbl at any circumferential location can be expressed in terms of an angle $\varphi$ and incorporated into the method.

$$Rbl = f(Re, \; Pr, \; x/D, \; Gr, \; D/2R, \; \varphi)$$
$$\text{Eq. 6}$$

The dependency of boundary layer resistance Rbl on $\varphi$ can be, for example, determined by a computational fluid dynamics calculation.

In Figure 8, the first temperature 13 sensor is arranged on the pipe 12, upstream from the second temperature sensor 14. The pipe 12 is preferably non-vertical or essentially horizontal. The first temperature sensor 13 measures the surface temperature Ts of the pipe 12. Ts corresponds to the first temperature data T1.

The second temperature sensor 14 is an invasive temperature sensor. The second temperature sensor 14 is arranged downstream from the first temperature sensor 13. The second (invasive) temperature 14 sensor here is used to determine a invasive temperature Tinv. The invasive temperature Tinv corresponds to the second temperature data T2.

This embodiment comprises as input the process condition data P or process parameters like density, viscosity, pipe dimensions, velocity and pressure and the surface temperature and the invasive temperature Tinv. This data is input into the comparison model to calculate a predicted surface temperature Tsp. The difference between the surface temperature Ts and the predicted surface temperature Tsp is used to determine flow data F, here in particular flow state data or stratification data. The comparison model also allows to determine a temperature cross section. In other words it allows to determine the fluid temperature Tm at the top, middle and bottom of the pipe 12. In a stratified flow, the fluid temperature Tm at the top, middle and bottom are different from each other.

The presence or probability of a stratification can be output in the form of an alarm. The temperature distribution across the pipe 12 is provided as an output using several variables for lower, middle and top temperature. To re-iterate, the model ensures that the process condition data (Nominal flow rate, pressure, density, viscosity, pipe dimensions, wall thickness and thermal conductivity of the fluid) are either input as stationary nominal parameters or even as inputs from real sensors in the vicinity and are taken into consideration.

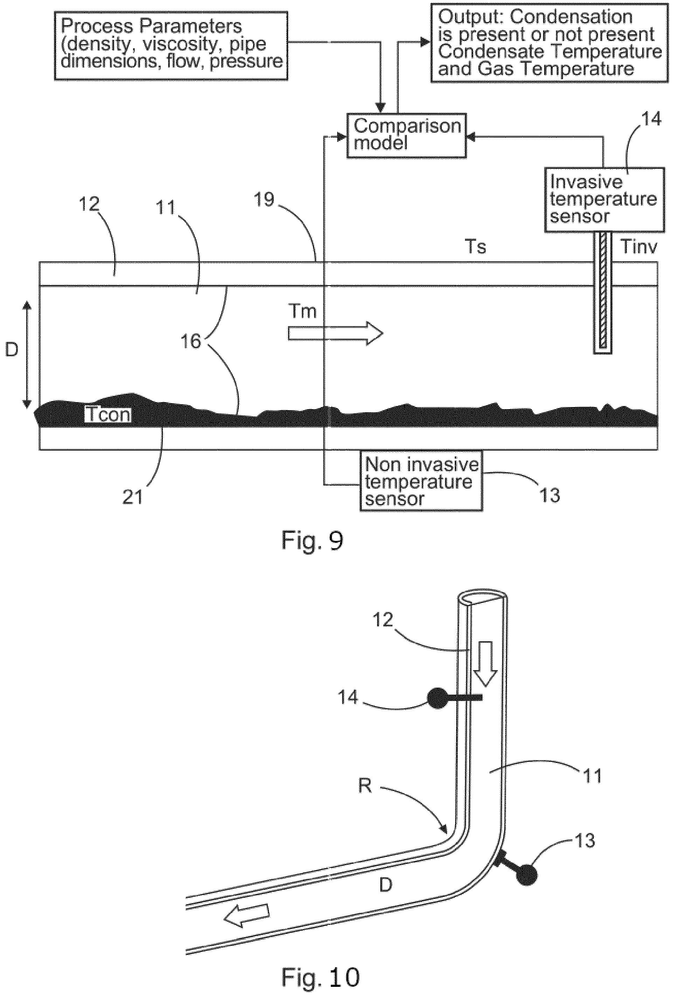

As shown in Figure 9, the first temperature sensor 13 for measuring the surface temperature Ts of the pipe 12 is placed upstream of the second temperature sensor 14. Alternatively the first temperature sensor 13 can also be placed downstream or at the same axial position the second temperature sensor 14. The second temperature sensor 14 is an invasive temperature sensor. The fluid 11 in this embodiment is gaseous.

The non-invasive first temperature sensor 13 is positioned in circumferentially opposite position of the invasive second temperature sensor 14. Preferably on a position where a condensate 21 collection is most likely to occur. This can easily be determined by persons skilled in the art. For example, the surface sensor on an essentially horizontal pipe 12 should be mounted on or close to the lower end of the pipe 12. This embodiment is advantageous for steam measurement. Other uses are possible.

In Figure 9, the measured data of the invasive second temperature sensor 14 and input process condition data P are used to predict the surface temperature Ts of the pipe 12. The measurement of the invasive second temperature sensor 14 represents the fluid temperature Tm in the bulk of the gas stream. The difference between the surface temperature Ts and the predicted temperature Tsp is used in the comparison model to determine the existence of

7

condensate 21 in the pipe 12 as well as the temperature of the fluid 11 and the possible condensate temperature Tcon.

For a bend as shown in Figure 10, the sensor is mounted on or close to the outer side. Process condition data P (nominal flow rate, pressure, density, viscosity, pipe dimensions, wall thickness and thermal conductivity of the fluid) are either input as stationary nominal parameters or as inputs from sensors.

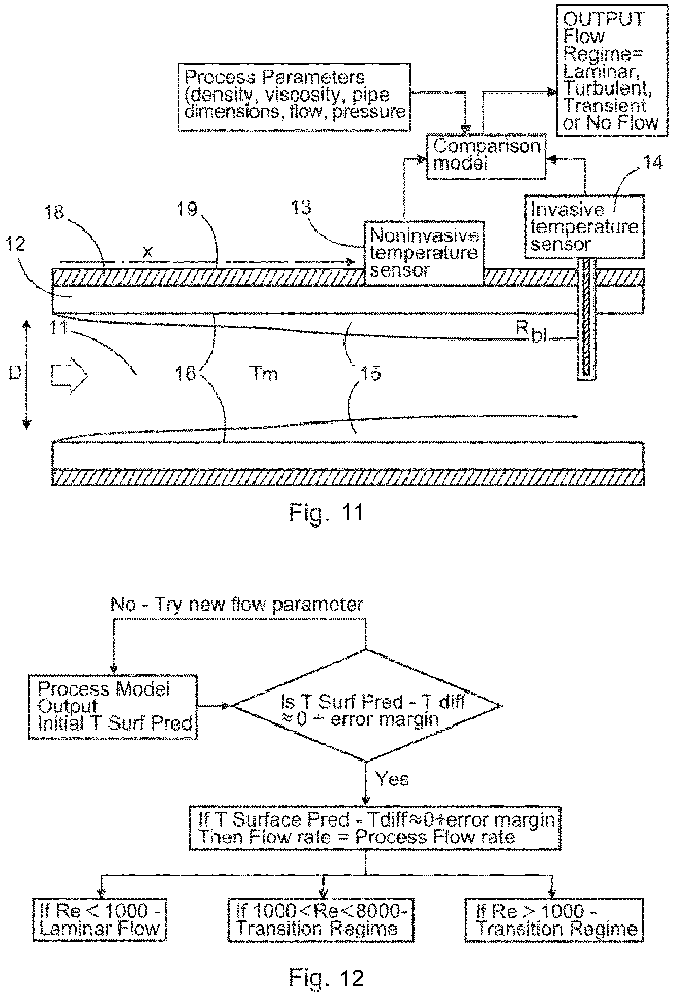

Figure 11 is similar to Figure 8. Contrary to Figure 8, Figure 11 comprises an insulation 18 arranged around the pipe 12. The first temperature sensor 13 is arranged on the pipe 12. In other words, the first temperature sensor 13 is partially enclosed by the insulation 18 and in direct contact with the mantle of the pipe 12. In the embodiment according to Figure 11, the presence of stratification or low flow is measured. The same embodiment as in Figure 11 can be used to measure flow regime data, in particular whether the flow in the pipe 12 is laminar, transient or in a turbulent regime.

For this reason, the difference between the measured invasive temperature Tinv, the predicted surface temperature Tsp based on the comparison model and the true surface temperature Ts is used to determine the flow regime.

The advantage of this embodiment is that the comparison model for predicting the fluid temperature Tm provides a flow-dependent temperature difference between an invasive measurement and the surface.

Figure 12 shows an iterative estimation process whereby the estimated flow rate is calculated and the flow regime determined by calculating the Reynolds number Re using the pipe parameter and process condition data P. The process or comparison model predicts a surface temperature Tsp based on a flow parameter. The predicted surface temperature is compared to a difference of the measured temperatures Tdiff. If the difference of the predicted surface temperature Tsp and the difference temperature Tdiff is around zero and in an error margin, the flow rate equals the process flow rate, else the flow parameter gets amended and the process starts again. Based on Reynolds number Re, it can be concluded if it is a laminar, transitional or turbulent flow regime.

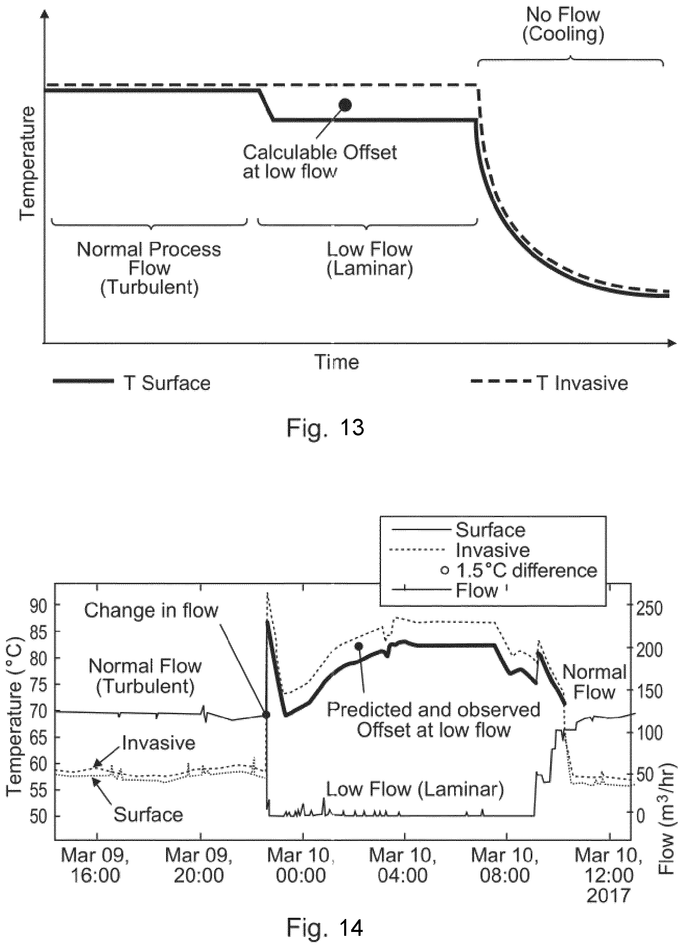

Figure 13, Figure 14 and Figure 15 show practical examples of the output of such a sensor combination in a real process environment with a time series data set.

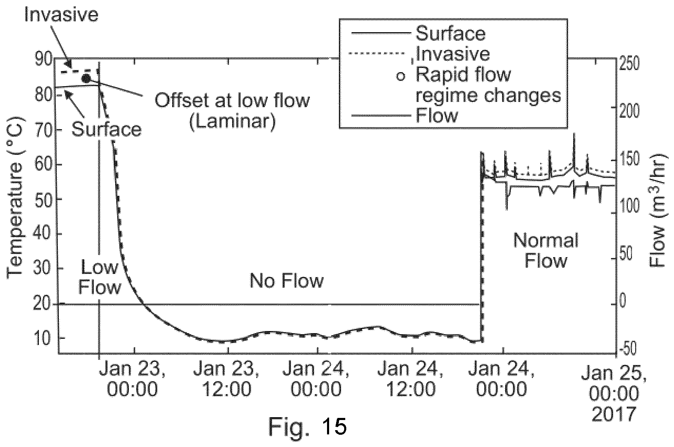

Figure 13 illustrates the temperatures during the transitions from a normal process flow (turbulent) to a low flow regime (laminar) and from a low flow to a no flow (cooling) regime. Figure 14 illustrates the temperatures in a transition from a normal flow to a low flow regime and back to a normal flow regime. Figure 15 illustrates the temperature behaviour during a transition from a low flow to a no flow regime and from a no flow to a normal flow regime.

Under normal (turbulent) flow conditions, the predicted measurements and the surface measurements match the criteria for turbulent flow (validated by a flow meter). During a low flow regime, the temperature of both the invasive and non-invasive measurement do not cool down but follow with an offset or a larger difference. At a later stage both invasive and surface cool at relatively the same rates and with a significantly reduced separation indicating a true no flow regime.

In other words, during a low flow regime, the surface and invasive temperature show a larger difference than during a normal flow regime. Using this, the flow regime can be derived from the surface and invasive temperature.

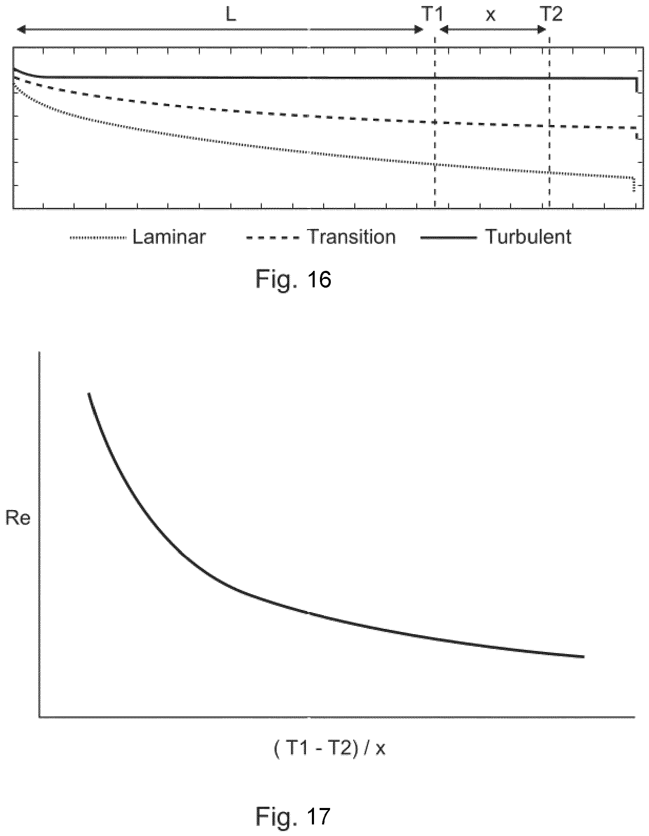

In Figures 16 and 17, first and second temperature data or pipe surface temperatures T1 and T2 are measured by the first and second temperature sensors 13, 14 at points separated by distance x. Corresponding to first and second temperature data T1 - T2 or ΔT the Reynolds number Re is obtained from the relation between Re and ΔT. The boundary layer resistance Rbl is modified accordingly and the fluid temperature Tm calculated using equation 2.

The same embodiment shown in Figure 11 can also be used to predict or measure flow rates of gas flows. For flowing gases, the boundary layer resistance Rbl is influenced by the flow rate with the difference between the surface temperature Ts and bulk fluid temperature Tm being significant at low flow rates. For an additional input into the model in such cases would be the pressure either as a nominal parameter or as a variable from an existing measurement. The knowledge of the pressure can significantly increase the accuracy of the measurement. A further embodiment may introduce a known thermal insulation 18 around the measurement with a known thermal resistance Rins in order to increase the accuracy.

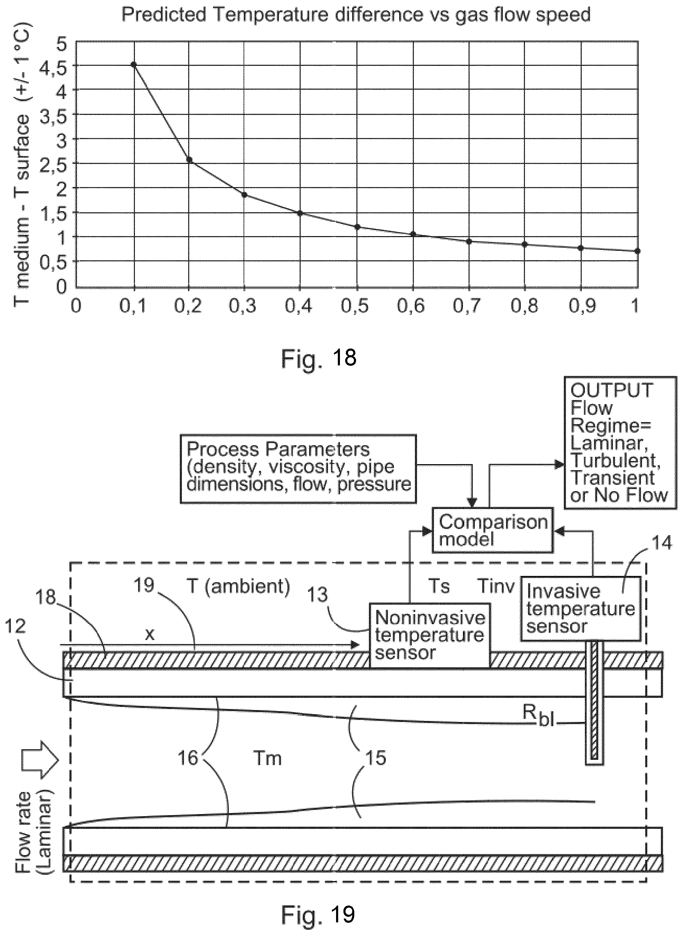

Figure 18 shows the relation between a predicted temperature difference and a flow speed of the fluid, in particular a gas. The difference decreases with a growing flow speed.

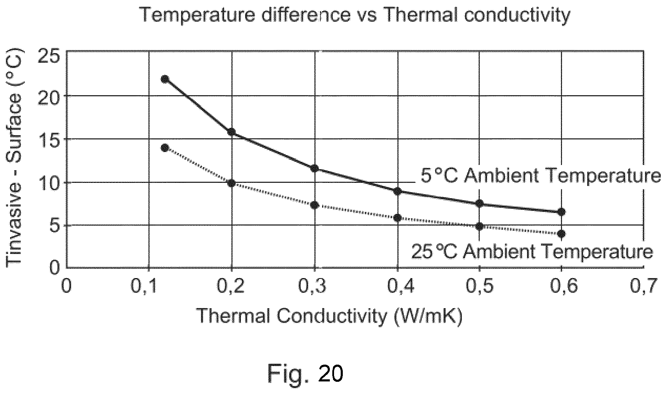

In a further embodiment according to Figure 19, the real time measurement of thermal conductivity of liquids is solved. The embodiment correspond in structure to the embodiment according to Figure 11. This embodiment ensures an in-situ measurement unlike existing viscometers or ultrasonic non-contact measurements. In such an embodiment, the flow of the fluid 11 in the horizontal pipe 12 is ensured to be slow enough to ensure laminar flow. The outer surface 19 of the wall of the pipe 12 is insulated with a known insulation 18. The boundary layer resistance Rbl and hence the corresponding difference between the surface temperature Ts and the invasive measurement Tinv is dependent on the thermal conductivity of the fluid 11. The measured difference between the invasive temperature Tinv and surface temperature Ts in a steady state, laminar flow rate (with all other factors known) will indicate the thermal conductivity of the fluid 11 as shown in Figure 20.

In an alternate embodiment, the ambient temperature can be controlled so as to ensure a significant temperature difference between the fluid 11 and the ambient. Preferably, the measurement of the surface temperature Ts should be as accurate as possible. This is possible with reasonably insulated and carefully installed cable thermometers. Also, temperatures should not be higher than approximately 100 °C.

The present disclosure has been described in conjunction with exemplary preferred embodiments. However, other variations can be understood and effected by those persons skilled in the art and practicing the claimed invention, from the studies of the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at different nodes using different equipment/data processing units.

In the claims as well as in the description the word "comprising" does not exclude other elements or steps and the indefinite article "a" or "an" does not exclude a plurality. A single element or other unit may fulfill the functions of several entities or items recited in the claims.

Reference signs

| S1 | first pipe section |
|---|---|
| S2 | second pipe section |
| Tm | fluid temperature data |
| T1 | first temperature data |
| T2 | second temperature data |
| Ts | surface temperature |
| Tsp | predicted surface temperature |
| Tinv | invasive temperature |
| Tcon | condensate temperature |
| P | process condition data |
| Rbl | thermal boundary resistance data |
| Rp | pipe resistance |
| Rins | insulation resistance |
| Ra | external resistance |
| 10 | system |
| 11 | fluid |
| 12 | pipe |
| 13 | first temperature sensor |
| 14 | second temperature sensor |
| 15 | boundary layer |
| 16 | inner surface of the wall |
| 18 | insulation |
| 19 | outer surface of the wall |
| 20 | reference point |
| 21 | condensate |

**Claims**

1.  Computer implemented method for determining boundary thermal resistance data (Rbl) of a boundary layer (15), comprising the following steps:

    obtaining first temperature data (T1) from a first temperature sensor (13), which is arranged at a first pipe section (S1);
    obtaining second temperature data (T2) from a second temperature sensor (14), which is arranged at a second pipe section (S2), wherein
    the first temperature sensor (13) is a non-invasive temperature sensor and the second temperature sensor (14) is an invasive temperature sensor;
    providing process condition data (P);
    determining boundary thermal resistance data (Rbl) of a boundary layer (15) of the fluid (11) next to an inner surface (16) of the wall of the pipe (12) based on the process condition data (P) and/or based on the first temperature data (T1) and/or the second temperature data (T2).

2.  Method according to claim 1, **characterized in**
    determining the temperature data (Tm) of the fluid (11) based on at least the first and/or second temperature data (T1, T2) and the boundary thermal resistance data (Rbl) of the boundary layer (15).

3. Method according to claim 1 or 2, **characterized in**
determining flow data (F) of the fluid (11) based on a comparison model using the first and second temperature data (T1, T2) and the process condition data (P).

4. Method according to the preceding claim, **characterized in that**
the flow data (F) comprise flow state data and/or flow regime data and/or stratification data and/or allocation data.

5. Method according to any one of the preceding claims, **characterized in that**
the process condition data (P) comprise distance data (X) of the first temperature sensor (13) and/or second temperature sensor (14) to a reference point, in particular to a feature of the pipe (12), in particular an inlet.

6. Method according to any one of the preceding claims, **characterized in that**
the process condition data (P) comprise flow velocity data, viscosity data and density data of the fluid (11) and pipe diameter data.

7. Method according to any one of the preceding claims, **characterized in that**
the process condition data (P) comprise viscosity data, thermal conductivity data and specific heat capacity data of the fluid (11).

8. Method according to any one of the preceding claims, **characterized in that**
the process condition data (P) comprise curvature radius data and diameter data of the pipe (12).

9. Method according to any one of the preceding claims, **characterized in that**
the process condition data (P) comprise pressure data and/or the pipe material data and/or wall thickness data.

10. Method according to any one of the preceding claims, **characterized in**

determining a thermal resistance network; wherein
the thermal resistance network comprises external thermal resistance data (Ra), insulation thermal resistance data (Rins), pipe thermal resistance data (Rp) and the boundary thermal resistance data (Rbl).

11. Method according to any one of claims 1 - 10, **characterized in that**

a measured surface temperature (Ts) is provided based on the first temperature data (T1),
a predicted surface temperature (Tsp) is predicted based on the second temperature data (T2), and
the difference between the predicted surface temperature (Tsp) and the measured surface temperature (Ts) is used to determine the flow state, in particular whether a stratification is present.

12. Method according to any one of the claims 1 - 10, **characterized in that**

the non-invasive first temperature sensor (13) is positioned circumferentially offset from the invasive second temperature sensor (14); wherein
a surface temperature (Tsp) is predicted based on the second temperature data (T2) and a difference from the measured surface temperature (Ts) of the first temperature sensor (13) and the predicted surface temperature (Tsp) can be used to determine an allocation of condensate, crystallization and/or other buildups.

13. Method according to any one of the claims 1 - 10, **characterized in that**

the second temperature data (T2) provides a predicted surface temperature (Tsp) and a measured invasive temperature (Tinv), wherein
the difference between the measured invasive temperature (Tinv) and the measured surface temperature (Ts) based on the first and second temperature data (T1, T2) and the predicted surface temperature (Tsp) is used to determine the flow regime, in particular whether a turbulent, transitional or laminar flow regime is present.

14. Computer program product,
**characterized in that**

when executed on computing devices of a computing environment, is configured to carry out the steps of the method according to any one of the claims 1 to 13.

15. System (10) for providing temperature data (Tm) of a fluid (11) flowing through a pipe (12), the system comprising:

a first temperature sensor (13) for providing first temperature data (T1), which is thermally coupleable to a first pipe section (S1);
a second temperature sensor (14) for providing second temperature data (T2), which is thermally coupleable to a second pipe section (S2); wherein
the first temperature sensor (13) is a non-invasive temperature sensor and the second temperature sensor (14) is an invasive temperature sensor;
the system (10) comprises a processing unit configured to determine the temperature data (Tm) of the fluid (11) on the basis of at least the first and/or second temperature data (T1, T2) and boundary thermal resistance data (Rbl) of a boundary layer (15); and to determine flow data (F) of the fluid (11) **characterised in that** the determination of the flow data (F) of the fluid (11) is based on a comparison model using the first and second temperature data (T1, T2) and process condition data (P).

**Patentansprüche**

1. Computerimplementiertes Verfahren zum Bestimmen von Grenzwärmewiderstandsdaten (Rbl) einer Grenzschicht (15), das die folgenden Schritte umfasst:

Erhalten erster Temperaturdaten (T1) von einem ersten Temperatursensor (13), der an einem ersten Rohrabschnitt (S1) angeordnet ist;
Erhalten zweiter Temperaturdaten (T2) von einem zweiten Temperatursensor (14), der an einem zweiten Rohrabschnitt (S2) angeordnet ist,
wobei der erste Temperatursensor (13) ein nicht-invasiver Temperatursensor und der zweite Temperatursensor (14) ein invasiver Temperatursensor ist;
Bereitstellen von Prozesszustandsdaten (P);
Bestimmen von Grenzwärmewiderstandsdaten (Rbl) einer Grenzschicht (15) des Fluids (11) neben einer Innenfläche (16) der Wand des Rohrs (12) auf Grundlage der Prozesszustandsdaten (P) und/oder auf der Grundlage der ersten Temperaturdaten (T1) und/oder der zweiten Temperaturdaten (T2).

2. Verfahren nach Anspruch 1, **dadurch gekennzeichnet, dass** die Temperaturdaten (Tm) des Fluids (11) auf der Grundlage mindestens der ersten und/oder zweiten Temperaturdaten (T1, T2) und der Grenzwärmewiderstandsdaten (Rbl) der Grenzschicht (15) bestimmt werden.

3. Verfahren nach Anspruch 1 oder 2, **gekennzeichnet durch** das Bestimmen von Strömungsdaten (F) des Fluids (11) auf der Grundlage eines Vergleichsmodells unter Verwendung der ersten und zweiten Temperaturdaten (T1, T2) und der Prozesszustandsdaten (P).

4. Verfahren nach dem vorstehenden Anspruch, **dadurch gekennzeichnet, dass** die Strömungsdaten (F) Strömungszustandsdaten und/oder Strömungsregimedaten und/oder Schichtungsdaten und/oder Zuordnungsdaten umfassen.

5. Verfahren nach einem der vorstehenden Ansprüche, **dadurch gekennzeichnet, dass** die Prozesszustandsdaten (P) Distanzdaten (X) des ersten Temperatursensors (13) und/oder des zweiten Temperatursensors (14) zu einem Referenzpunkt, insbesondere zu einem Merkmal des Rohrs (12), insbesondere einem Einlass, umfassen.

6. Verfahren nach einem der vorstehenden Ansprüche, **dadurch gekennzeichnet, dass** die Prozesszustandsdaten (P) Strömungsgeschwindigkeitsdaten, Viskositätsdaten und Dichtedaten des Fluids (11) sowie Rohrdurchmesserdaten umfassen.

7. Verfahren nach einem der vorstehenden Ansprüche, **dadurch gekennzeichnet, dass** die Prozesszustandsdaten (P) Viskositätsdaten, Wärmeleitfähigkeitsdaten und spezifische Wärmekapazitätsdaten des Fluids (11) umfassen.

8. Verfahren nach einem der vorstehenden Ansprüche, **dadurch gekennzeichnet, dass** die Prozesszustandsdaten (P) Krümmungsradiusdaten und Durchmesserdaten des Rohrs (12) umfassen.

9. Verfahren nach einem der vorstehenden Ansprüche, **dadurch gekennzeichnet, dass** die Prozesszustandsdaten (P) Druckdaten und/oder Rohrmaterialdaten und/oder Wanddickendaten umfassen.

10. Verfahren nach einem der vorstehenden Ansprüche, **dadurch gekennzeichnet, dass** ein Wärmewiderstandsnetzwerk bestimmt wird, wobei das Wärmewiderstandsnetzwerk externe Wärmewiderstandsdaten (Ra), Isolationswärmewiderstandsdaten (Rins), Rohrwärmewiderstandsdaten (Rp) und die Grenzwärmewiderstandsdaten (Rbl) umfasst.

11. Verfahren nach einem der Ansprüche 1 bis 10, **dadurch gekennzeichnet, dass** eine gemessene Oberflächentemperatur (Ts) auf Grundlage der ersten Temperaturdaten (T1) bereitgestellt wird,

    eine vorhergesagte Oberflächentemperatur (Tsp) auf Grundlage der zweiten Temperaturdaten (T2) vorhergesagt wird und
    die Differenz zwischen der vorhergesagten Oberflächentemperatur (Tsp) und der gemessenen Oberflächentemperatur (Ts) verwendet wird, um den Strömungszustand zu bestimmen, insbesondere ob eine Schichtung vorliegt.

12. Verfahren nach einem der Ansprüche 1 bis 10, **dadurch gekennzeichnet, dass** der nichtinvasive erste Temperatursensor (13) in Umfangsrichtung versetzt zum invasiven zweiten Temperatursensor (14) positioniert ist; wobei eine Oberflächentemperatur (Tsp) auf der Grundlage der zweiten Temperaturdaten (T2) vorhergesagt wird und eine Differenz zwischen der gemessenen Oberflächentemperatur (Ts) des ersten Temperatursensors (13) und der vorhergesagten Oberflächentemperatur (Tsp) verwendet werden kann, um eine Zuordnung von Kondensat, Kristallisation und/oder anderen Ablagerungen zu bestimmen.

13. Verfahren nach einem der Ansprüche 1 bis 10, **dadurch gekennzeichnet, dass** die zweiten Temperaturdaten (T2) eine vorhergesagte Oberflächentemperatur (Tsp) und eine gemessene invasive Temperatur (Tinv) liefern, wobei die Differenz zwischen der gemessenen invasiven Temperatur (Tinv) und der gemessenen Oberflächentemperatur (Ts) auf der Grundlage der ersten und zweiten Temperaturdaten (T1, T2) und der vorhergesagten Oberflächentemperatur (Tsp) verwendet wird, um das Strömungsregime zu bestimmen, insbesondere, ob ein turbulentes, ein Übergangs- oder ein laminares Strömungsregime vorliegt.

14. Computerprogrammprodukt, **dadurch gekennzeichnet, dass** es bei Ausführung auf Rechengeräten einer Rechenumgebung so konfiguriert ist, dass es die Schritte des Verfahrens gemäß einem der Ansprüche 1 bis 13 ausführt.

15. System (10) zum Bereitstellen von Temperaturdaten (Tm) eines durch ein Rohr (12) fließenden Fluids (11), wobei das System umfasst:

    einen ersten Temperatursensor (13) zum Bereitstellen erster Temperaturdaten (T1), der thermisch mit einem ersten Rohrabschnitt (S1) koppelbar ist;
    einen zweiten Temperatursensor (14) zum Bereitstellen von zweiten Temperaturdaten (T2), der thermisch mit einem zweiten Rohrabschnitt (S2) koppelbar ist;
    wobei der erste Temperatursensor (13) ein nicht-invasiver Temperatursensor ist und der zweite Temperatursensor (14) ein invasiver Temperatursensor ist;
    wobei das System (10) eine Verarbeitungseinheit umfasst, die so konfiguriert ist, dass sie die Temperaturdaten (Tm) des Fluids (11) auf Grundlage mindestens der ersten und/oder zweiten Temperaturdaten (T1, T2) und der Grenzwärmewiderstandsdaten (Rbl) einer Grenzschicht (15) bestimmt; und um Strömungsdaten (F) des Fluids (11) zu bestimmen,
    **dadurch gekennzeichnet, dass** die Bestimmung der Strömungsdaten (F) des Fluids (11) auf einem Vergleichsmodell basiert, das die ersten und zweiten Temperaturdaten (T1, T2) und Prozesszustandsdaten (P) verwendet.

**Revendications**

1. Procédé mis en œuvre par ordinateur de détermination de données de résistance thermique de limite (Rbl) d'une couche de limite (15), comprenant les étapes suivantes :

l'obtention de premières données de température (T1) en provenance d'un premier capteur de température (13), qui est agencé au niveau d'une première section de tuyau (S1) ;
l'obtention de secondes données de température (T2) en provenance d'un second capteur de température (14), qui est agencé au niveau d'une seconde section de tuyau (S2), dans lequel
le premier capteur de température (13) est un capteur de température non invasif et le second capteur de température (14) est un capteur de température invasif ; la fourniture de données de condition de processus (P) ;
la détermination de données de résistance thermique de limite (Rbl) d'une couche de limite (15) du fluide (11) à côté d'une surface intérieure (16) de la paroi du tuyau (12) sur la base des données de condition de processus (P) et/ou sur la base des premières données de température (T1) et/ou des secondes données de température (T2).

2. Procédé selon la revendication 1, **caractérisé par** la détermination des données de température (Tm) du fluide (11) sur la base au moins des premières et/ou secondes données de température (T1, T2) et des données de résistance thermique de limite (Rbl) de la couche de limite (15).

3. Procédé selon la revendication 1 ou 2, **caractérisé par**
la détermination de données d'écoulement (F) du fluide (11) sur la base d'un modèle de comparaison en utilisant les premières et secondes données de température (T1, T2) et les données de condition de processus (P).

4. Procédé selon la revendication précédente, **caractérisé en ce que**
les données d'écoulement (F) comprennent des données d'état d'écoulement et/ou des données de régime d'écoulement et/ou des données de stratification et/ou des données d'attribution.

5. Procédé selon l'une quelconque des revendications précédentes, **caractérisé en ce que**
les données de condition de processus (P) comprennent des données de distance (X) du premier capteur de température (13) et/ou du second capteur de température (14) par rapport à un point de référence, en particulier par rapport à une caractéristique du tuyau (12), en particulier une entrée.

6. Procédé selon l'une quelconque des revendications précédentes, **caractérisé en ce que**
les données de condition de processus (P) comprennent des données de vitesse d'écoulement, des données de viscosité, et des données de densité du fluide (11), et des données de diamètre de tuyau.

7. Procédé selon l'une quelconque des revendications précédentes, **caractérisé en ce que**
les données de condition de processus (P) comprennent des données de viscosité, des données de conductivité thermique, et des données de capacité calorifique spécifique du fluide (11).

8. Procédé selon l'une quelconque des revendications précédentes, **caractérisé en ce que**
les données de condition de processus (P) comprennent des données de rayon de courbure et des données de diamètre du tuyau (12).

9. Procédé selon l'une quelconque des revendications précédentes, **caractérisé en ce que**
les données de condition de processus (P) comprennent des données de pression et/ou des données de matériau et ou des données d'épaisseur de paroi du tuyau.

10. Procédé selon l'une quelconque des revendications précédentes, **caractérisé par**

la détermination d'un réseau de résistance thermique ; dans lequel
le réseau de résistance thermique comprend des données de résistance thermique externe (Ra), des données de résistance thermique d'isolation (Rins), des données de résistance thermique de tuyau (Rp), et les données de résistance thermique de limite (Rbl).

11. Procédé selon l'une quelconque des revendications 1 à 10, **caractérisé en ce que**

une température de surface mesurée (Ts) est fournie sur la base des premières données de température (T1),
une température de surface prédite (Tsp) est prédite sur la base des secondes données de température (T2), et
la différence entre la température de surface prédite (Tsp) et la température de surface mesurée (Ts) est utilisée pour déterminer l'état d'écoulement, en particulier le fait qu'une stratification est présente ou non.

12. Procédé selon l'une quelconque des revendications 1 à 10, **caractérisé en ce que**

le premier capteur de température non invasif (13) est positionné de façon décalée circonférentiellement par rapport au second capteur de température invasif (14) ; dans lequel

une température de surface (Tsp) est prédite sur la base des secondes données de température (T2) et d'une différence par rapport à la température de surface mesurée (Ts) du premier capteur de température (13) et la température de surface prédite (Tsp) peut être utilisée pour déterminer une attribution de condensat, de cristallisation, et/ou d'autres accumulations.

13. Procédé selon l'une quelconque des revendications 1 à 10, **caractérisé en ce que**

les secondes données de température (T2) fournissent une température de surface prédite (Tsp) et une température invasive mesurée (Tinv), dans lequel

la différence entre la température invasive mesurée (Tinv) et la température de surface mesurée (Ts) sur la base des premières et secondes données de température (T1, T2) et de la température de surface prédite (Tsp) est utilisée pour déterminer le régime d'écoulement, en particulier le fait qu'un régime d'écoulement turbulent, transitionnel, ou laminaire est présent.

14. Produit programme d'ordinateur,
**caractérisé en ce que**,
lorsqu'il est exécuté sur des dispositifs informatiques d'un environnement informatique, il est configuré pour effectuer les étapes du procédé selon l'une quelconque des revendications 1 à 13.

15. Système (10) pour fournir des données de température (Tm) d'un fluide (11) s'écoulant à travers un tuyau (12), le système comprenant :

un premier capteur de température (13) pour fournir des premières données de température (T1), qui peut être couplé thermiquement à une première section de tuyau (S1) ;
un second capteur de température (14) pour fournir des secondes données de température (T2), qui peut être couplé thermiquement à une seconde section de tuyau (S2) ; dans lequel
le premier capteur de température (13) est un capteur de température non invasif et le second capteur de température (14) est un capteur de température invasif ;
le système (10) comprend une unité de traitement configurée pour déterminer les données de température (Tm) du fluide (11) sur la base au moins des premières et/ou secondes données de température (T1, T2) et de données de résistance thermique de limite (Rbl) d'une couche de limite (15) ; et pour
déterminer des données d'écoulement (F) du fluide (11), **caractérisé en ce que** la détermination des données d'écoulement (F) du fluide (11) est basée sur un modèle de comparaison en utilisant les premières et secondes données de température (T1, T2) et des données de condition de processus (P).

Fig. 1

Fig. 2

Fig. 3

Obtain physical properties of fluid, fluid velocity, pipe and insulation geometrical features. Measure Ts and Ta

Calculate Rp, Rins

Calculate Re, Pr. Measure distance of measurement point, x, from nearest upstream feature and hence calculate $Rbl = f(Re, Pr, x/D)$.

Calculate: $Tm' = Ta + (Ts-Ta)(Rbl + Rp + Rins + Ra)/(Rins + Ra)$

Fig. 4a

Obtain physical properties of fluid, fluid velocity, pipe and insulation geometrical features. Measure Ts and Ta

Calculate Rp, Rins

Calculate Re, Pr. Measure distance of measurement point, x, from nearest upstream feature

Calculate Gr

Calculate: $Rbl = f(Re, Pr, x/D, GR)$

Calculate: $Tm = Ta + (Ts-Ta)(Rbl + Rp + Rins + Ra)/(Rins + Ra)$

Fig. 4b

Fig. 5

Fig. 6

Fig. 7

Fig. 8

Process Parameters
(density, viscosity, pipe
dimensions, flow, pressure

Output: Condensation
is present or not present
Condensate Temperature
and Gas Temperature

14

Comparison
model

Invasive
temperature
sensor

12    11    19

Ts                    Tinv

D

Tm

16

Tcon

Non invasive
temperature
sensor                    13

21

Fig. 9

12

14

R

11

13

D

Fig. 10

Fig. 11

Fig. 12

Fig. 13

Fig. 14

Fig. 15

Fig. 16

Fig. 17

Predicted Temperature difference vs gas flow speed

Fig. 18

Fig. 19

Fig. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3537124 B1
- EP 4009022 A1

- US 2017219438 A1